# EUROPEAN PATENT APPLICATION

(11) **EP 3 048 541 A1**
(43) Date of publication of application: **27.07.2016**
(21) Application number: 14855748.1
(22) Date of filing: 13.10.2014
(51) Int. Cl.: G06F 17/30

(54) **FILE ACCESS METHOD AND DEVICE**

(30) Priority: 21.10.2013 CN 201310496825
(71) Applicant: Huawei Technologies Co., Ltd., Longgang District Shenzhen, Guangdong 518129 (CN)
(72) Inventor: SHI, Jiaxing, Shenzhen Guangdong 518129 (CN); LI, Jun, Shenzhen Guangdong 518129 (CN); FANG, Fan, Shenzhen Guangdong 518129 (CN)
(74) Representative: Gill Jennings & Every LLP
(86) International application number: PCT/CN2014/088446
(87) International publication number: WO 2015/058628

(57) **Abstract**

The present invention discloses a method and an apparatus for accessing a file, where the method includes: receiving, by a file system, a file access request from an application layer; acquiring metadata of a file if the file access request is to acquire content of the file according to a query condition, where the metadata of the file includes index information of the file, and the query condition is used to select content of the file with respect to the index information of the file; determining, according to the index information of the file, content that is of the file and that meets the query condition; and acquiring, by using a magnetic disk IO controller, all content that is of the file and that meets the query condition, so that the application layer accesses the file. According to the foregoing manner, in the present invention, multiple times of page faults and multiple times of magnetic disk IO that occur in one query can be avoided, and memory usage is reduced by means of filtering out a part of data.

## Description

### TECHNICAL FIELD

The present invention relates to the field of file system technologies, and in particular, to a method and an apparatus for accessing a file.

### BACKGROUND

In many cases, a database is independent from a file system. Only a "utilization" relationship, instead of an "alliance" relationship exists between the database and the file system during running of the two. That is, the database only invokes a read/write function of the file system, while the file system only receives a request, regardless of whether the received request is a request from the database. The file system provides its own interface. The database has to resort to the file system to read all data and then filters the data one by one. The file system returns a lot of useless data, which increases overheads. A manner in which the file system performs an operation by using the interface is: trying to read a file from a memory, where if the file has not been loaded into the memory, a page fault is caused; and actually invoking an IO drive to acquire data.

IBM Corporation develops a product which allows a database service to be implemented in a file system. That is, the file system allows a user to perform input according to a condition. However, the file system can determine only a boundary of the condition. During actual running, an interface of the file system still needs to be invoked to acquire data. That is, the user invokes the interface of the file system by using a file descriptor and an offset to acquire the data. Each time the interface of the file system is invoked to acquire data, whether the data has been loaded into a memory needs to be determined. If the data has not been loaded, a page fault occurs, and the file system invokes an IO drive to acquire the data, instead of loading all data that meets a condition into the memory at a time.

During long-term research and development, the inventor of this application finds that the foregoing solutions lead to low query performance of a file system because page faults and IO overheads of a magnetic disk occur multiple times in one query.

### SUMMARY

A technical problem to be mainly resolved in the present invention is to provide a method and an apparatus for accessing a file, so that multiple times of page faults and multiple times of magnetic disk IO that occur in one query can be avoided.

According to a first aspect, the present invention provides a method for accessing a file, including: receiving, by a file system, a file access request from an application layer; acquiring metadata of the file if the file access request is to acquire content of the file according to a query condition, where the metadata of the file includes index information of the file, and the query condition is used to select content of the file with respect to the index information of the file; determining, according to the index information of the file, content that is of the file and that meets the query condition; and acquiring, by using a magnetic disk IO controller, all content that is of the file and that meets the query condition, so that the application layer accesses the file.

In a first possible implementation manner of the first aspect, before the step of receiving, by a file system, a file access request from an application layer, the method includes: preprocessing, by the file system, the file according to a preset requirement to obtain the index information of the file; and storing the index information of the file in the metadata of the file.

With reference to the first possible implementation manner of the first aspect, in a second possible implementation manner of the first aspect, the index information includes at least a rule type and a range included by each cluster, and a manner of preprocessing the file is specified in the rule type.

In a third possible implementation manner of the first aspect, before the step of acquiring metadata of the file if the file access request is to acquire content of the file according to a query condition, the method includes: determining whether the file access request is to acquire the content of the file according to the query condition, where if the file access request includes at least a file descriptor, a parameter related to the query condition, and a buffer, the file access request is to acquire the content of the file according to the query condition.

With reference to the third possible implementation manner of the first aspect, in a fourth possible implementation manner of the first aspect, the buffer includes a fully-matching buffer and a partially-matching buffer.

With reference to the fourth possible implementation manner of the first aspect, in a fifth possible implementation manner of the first aspect, after the step of acquiring, by using a magnetic disk IO controller, all content that is of the file and that meets the query condition, the method includes: if the acquired content of the file fully matches the query condition, placing the acquired content of the file in the fully-matching buffer; and if the acquired content of the file partially matches the query condition, placing the acquired content of the file in the partially-matching buffer.

According to a second aspect, the present invention provides an apparatus for accessing a file, where the apparatus includes a receiving module, a first acquiring module, a determining module, and a second acquiring module, where the receiving module is configured to receive a file access request from an application layer; the first acquiring module is configured to: after the receiving module receives the file access request from the application layer, acquire metadata of the file when the file access request is to acquire content of the file according to a query condition, where the metadata of the file includes index information of the file, and the query condition is used to select content of the file with respect to the index information of the file; the determining module is configured to: after the first acquiring module acquires the metadata of the file, determine, according to the index information of the file, content that is of the file and that meets the query condition; and the second acquiring module is configured to: after the determining module determines the content that is of the file and that meets the query condition, acquire, by using a magnetic disk IO controller, all content that is of the file and that meets the query condition, so that the application layer accesses the file.

In a first possible implementation manner of the second aspect, the apparatus further includes an obtaining module and a storage module, where the obtaining module is configured to preprocess the file according to a preset requirement to obtain the index information of the file; and the storage module is configured to store the index information of the file in the metadata of the file after the obtaining module obtains the index information of the file.

With reference to the first possible implementation manner of the second aspect, in a second possible implementation manner of the second aspect, the index information includes at least a rule type and a range included by each cluster, and a manner of preprocessing the file is specified in the rule type.

In a third possible implementation manner of the second aspect, the apparatus further includes a judging module, where the judging module is configured to: determine whether the file access request is to acquire the content of the file according to the query condition; and when the file access request includes at least a file descriptor, a parameter related to the query condition, and a buffer, determine that the file access request is to acquire the content of the file according to the query condition.

With reference to the third possible implementation manner of the second aspect, in a fourth possible implementation manner of the second aspect, the buffer includes a fully-matching buffer and a partially-matching buffer.

With reference to the fourth possible implementation manner of the second aspect, in a fifth possible implementation manner of the second aspect, the apparatus further includes a placing module, where the placing module is configured to: when the acquired content of the file fully matches the query condition, place the acquired content of the file in the fully-matching buffer; and when the acquired content of the file partially matches the query condition, place the acquired content of the file in the partially-matching buffer.

Beneficial effects of the present invention are as follows: different from a situation in the prior art, in the present invention, index information of a file is stored in metadata of the file, and therefore, when a file access request that includes a query condition with respect to the index information is received from an application layer, all content that is of the file and that meets the query condition may be acquired according to the index information of the file by using a magnetic disk IO controller. In this way, multiple times of page faults and multiple times of magnetic disk IO that occur in one query can be avoided, and memory usage is reduced by means of filtering out a part of data.

### BRIEF DESCRIPTION OF DRAWINGS

FIG. 1 is a flowchart of an embodiment of a method for accessing a file according to the present invention;
FIG. 2 is a flowchart of another embodiment of a method for accessing a file according to the present invention;
FIG. 3 is a flowchart of still another embodiment of a method for accessing a file according to the present invention;
FIG. 4 is a schematic diagram of application of a specific example of a method for accessing a file according to the present invention;
FIG. 5 is a schematic structural diagram of an embodiment of an apparatus for accessing a file according to the present invention;
FIG. 6 is a schematic structural diagram of another embodiment of an apparatus for accessing a file according to the present invention;
FIG. 7 is a schematic structural diagram of still another embodiment of an apparatus for accessing a file according to the present invention; and
FIG. 8 is a schematic structural diagram of yet another embodiment of an apparatus for accessing a file according to the present invention.

### DESCRIPTION OF EMBODIMENTS

The following describes the present invention in detail with reference to accompanying drawings and implementation manners.

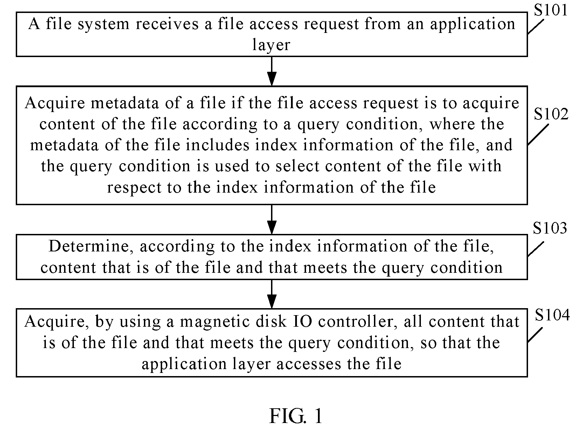

Referring to FIG. 1, FIG. 1 is a flowchart of an embodiment of a method for accessing a file according to the present invention, where the method includes the following steps:
Step S101: A file system receives a file access request from an application layer.

A system for accessing a file in the present invention includes three layers: a first one is an application layer, where a database is usually located at the application layer; a second one is a file system layer; and a third one is a magnetic disk, that is, a location in which a file is stored.

A file system is a method and a data structure used by an operating system to determine a file in a magnetic disk or a partition, that is, a method for organizing data in the magnetic disk. Specifically, the file system is responsible for creating a file for a user; storing, reading, modifying, and dumping the file; deleting the file when the user no longer uses the file; and the like.

Generally, a file system does not perform any processing on a file. A database is a warehouse in which data is organized, stored, and managed according to a data structure. In this embodiment of the present invention, the file system has already preprocessed a file according to a preset requirement. That is, some functions of a database are added to the file system. The preset requirement is a requirement preset for preprocessing (for example, organizing, sequencing, classifying, and collating) the file. For example, sequencing is performed on the file according to a condition, for example, sequencing may be performed, according to a column, on a column database file that records information about a column; the file is processed according to a hash value; or the file is processed according to a range of a parameter of the file.

Step S102: Acquire metadata of a file if the file access request is to acquire content of the file according to a query condition, where the metadata of the file includes index information of the file, and the query condition is used to select content of the file with respect to the index information of the file.

Metadata (Metadata) is data about other data (data about other data) or is structured data (structured data) used to provide related information of a resource.

An index itself is information that needs to be used frequently in a database and is a structure that is used to perform sequencing on a value of one or more columns in a database table. Particular information in the database table may be accessed quickly by using the index. In this embodiment of the present invention, the index information is introduced in the file system, and the index information obtained after the file is preprocessed is stored in the metadata of the file.

After preprocessing the file according to the preset requirement, the file system obtains the index information of the file and stores the index information of the file in the metadata of the file. The file system acquires the metadata of the file if the file access request is to acquire the content of the file according to the query condition. Because the index information of the preprocessed file is stored in the metadata, and the query condition is used to select the content of the file with respect to the index information of the file, a specific location, in a magnetic disk, of content that is of the file and that needs to be acquired may be conveniently learned according to the index information, and content that is of the file and that is required by the file access request can be acquired.

The index information includes at least a rule type and a range included by each cluster, and a manner of preprocessing the file is specified in the rule type. The rule type is used to specify how to preprocess the file. For example, sequencing is performed on the file, classification is performed according to a range of a parameter, or processing is performed according to a hash value.

A file system is an interface between an operating system and a drive. When requesting to read a file from a hard disk, the operating system requests a corresponding file system to open the file. A sector is a minimum physical storage unit of a magnetic disk. However, the operating system cannot perform addressing on large quantities of sectors. Therefore, the operating system groups adjacent sectors to form a cluster and manages the cluster. Each cluster may include 2, 4, 8, 16, 32, or 64 sectors. Apparently, a cluster is a logical concept used by the operating system, but not a physical characteristic of the magnetic disk. In order to better manage magnetic disk space and read data from the hard disk more efficiently, the operating system specifies that content of only one file can be placed in one cluster. Therefore, space occupied by a file can only be an integer multiple of a size of a cluster. If an actual size of a file is less than that of one cluster, the file still occupies space of one cluster.

When a range included by each cluster is known, a total quantity of clusters may be learned. Certainly, the index information may further include a data type of the file, for example, an exact numeric type, an approximate numeric type, a date and time type, a character data type, a Unicode character data type, a binary character data type, and another data type. The index information may further include other information, and details are not described herein.

Step S103: Determine, according to the index information of the file, content that is of the file and that meets the query condition.

Because the query condition is used to select the content of the file with respect to the index information of the file, the specific location, in the magnetic disk, of the content that is of the file and that needs to be acquired may be conveniently learned according to the index information, and the content that is of the file and that meets the query condition can be determined.

Step S104: Acquire, by using a magnetic disk IO controller, all content that is of the file and that meets the query condition, so that the application layer accesses the file.

As described above, a file is preprocessed according to a preset requirement in advance, index information obtained after the preprocessing is stored in metadata of the file, and a query condition is used to select content of the file with respect to the index information of the file. A storage location of content that is of the file and that meets the query condition may be quickly learned by using the index information; all content that is of the file and that meets the query condition may be acquired by using a magnetic disk IO controller, so that it is convenient for an application layer to access the file.

In this embodiment of the present invention, index information of a file that has been preprocessed according to a preset requirement is stored in metadata of the file, and when a file access request received from an application layer is to acquire content of the file according to a query condition, all content that is of the file and that meets the query condition may be acquired according to the index information by using a magnetic disk IO controller. Therefore, in this embodiment of the present invention, multiple times of page faults and multiple times of magnetic disk IO that occur in one query can be avoided, and memory usage is reduced by means of filtering out a part of data.

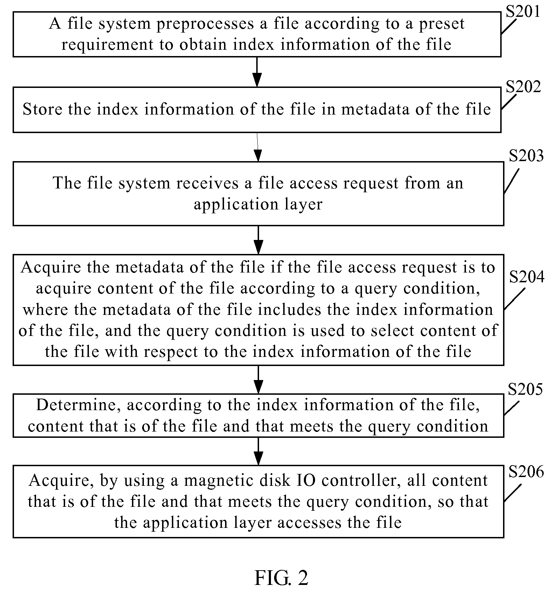

Referring to FIG. 2, FIG. 2 is a flowchart of another embodiment of a method for accessing a file according to the present invention. This embodiment is basically the same as the embodiment of FIG. 1; for same parts, reference is specifically made to FIG. 1 and corresponding descriptions; and a difference is as follows: this embodiment further includes step S201 and step S202, that is, first preprocessing a file before a file system receives a file access request from an application layer. Specific content is described as follows:
Step S201: A file system preprocesses a file according to a preset requirement to obtain index information of the file.
   A file system is a method and a data structure used by an operating system to determine a file in a magnetic disk or a partition, that is, a method for organizing data in the magnetic disk. Generally, a file system does not perform any processing on a file. A database is a warehouse in which data is organized, stored, and managed according to a data structure. In this embodiment of the present invention, the file system preprocesses the file according to the preset requirement. That is, some functions of a database are added to the file system. The preset requirement is a requirement preset for preprocessing (for example, organizing, sequencing, classifying, and collating) the file.
   It should be noted that the preset requirement may be sent to the file system in a form of a file preprocessing instruction.
Step S202: Store the index information of the file in metadata of the file.

After preprocessing the file according to the preset requirement, the file system obtains the index information of the file and stores the index information of the file in the metadata of the file. The file system acquires the metadata of the file if a file access request is to acquire content of the file according to a query condition. Because the index information of the preprocessed file is stored in the metadata, and the query condition is used to select content of the file with respect to the index information of the file, a specific location, in a magnetic disk, of content that is of the file and that needs to be acquired may be conveniently learned according to the index information, and content that is of the file and that is required by the file access request can be acquired.

The index information includes at least a rule type and a range included by each cluster, and a manner of preprocessing the file is specified in the rule type. The rule type is used to specify how to preprocess the file. For example, sequencing is performed on the file, classification is performed according to a range of a parameter, or processing is performed according to a hash value.

A file system is an interface between an operating system and a drive. When requesting to read a file from a hard disk, the operating system requests a corresponding file system to open the file. A sector is a minimum physical storage unit of a magnetic disk. However, the operating system cannot perform addressing on large quantities of sectors. Therefore, the operating system groups adjacent sectors to form a cluster and manages the cluster.

When a range included by each cluster is known, a total quantity of clusters may be learned. Certainly, the index information may further include a data type of the file, for example, an exact numeric type, an approximate numeric type, a date and time type, a character data type, a Unicode character data type, a binary character data type, and another data type. The index information may further include other information, and details are not described herein.

In the following, an actual example is used to describe a process of preprocessing performed by a file system on a file. The preprocessing process is performed by the file system, where the process includes the following content:
1. The file system receives a file preprocessing instruction that includes a preset requirement;
2. The file system acquires, according to a file descriptor, content of a file that needs to be preprocessed;
3. Create new file space according to a size of the file: set a file size threshold to A in advance; when the size of the file is less than A, directly create space with a size of A and an index size; and when the size of the file is greater than A, create N pieces of space with a size of A and an index size according to a need;
4. After the content of the file is sequenced, place the content of the file in the new created file space; for example, as described above, N pieces of space with a size of A and an index size are generated, and the content of the file needs to be placed in the N pieces of space; certainly, an occupation threshold B needs to be set herein, so as to avoid that the space is fully occupied at a time; (assuming that the threshold B is 70%, A is 100 M, and the index size is 5 M, after the content of the file is sequenced, the first 70 M is placed in the first space, 5 M is added at a location of 100 M, a next 70 M is placed in the second space, and so on); and
5. Establish an index with respect to data of each piece of space, and place index information in pre-allocated space.

It should be noted that placing data in new space and establishing an index of the new space that are described in the foregoing procedures 4 and 5 may be performed together in an actual application.

It should be noted that the foregoing example shows merely one manner of preprocessing performed by a file system on a file. In an actual application, another manner may also be used to preprocess a file to obtain index information of the file, so that a file system may obtain, according to the index information, content that is of the file and that meets a preset requirement.

Step S203: The file system receives a file access request from an application layer.

Step S204: Acquire the metadata of the file if the file access request is to acquire content of the file according to a query condition, where the metadata of the file includes the index information of the file, and the query condition is used to select content of the file with respect to the index information of the file.

Step S205: Determine, according to the index information of the file, content that is of the file and that meets the query condition.

Step S206: Acquire, by using a magnetic disk IO controller, all content that is of the file and that meets the query condition, so that the application layer accesses the file.

In this embodiment of the present invention, a file system preprocesses a file according to a preset requirement, obtained index information of the file is stored in metadata of the file, and when a file access request received from an application layer is to acquire content of the file according to a query condition, where the query condition is used to select content of the file with respect to the index information of the file, all content that is of the file and that meets the query condition may be acquired according to the index information by using a magnetic disk IO controller. Therefore, in this embodiment of the present invention, multiple times of page faults and multiple times of magnetic disk IO that occur in one query can be avoided, and memory usage is reduced by means of filtering out a part of data.

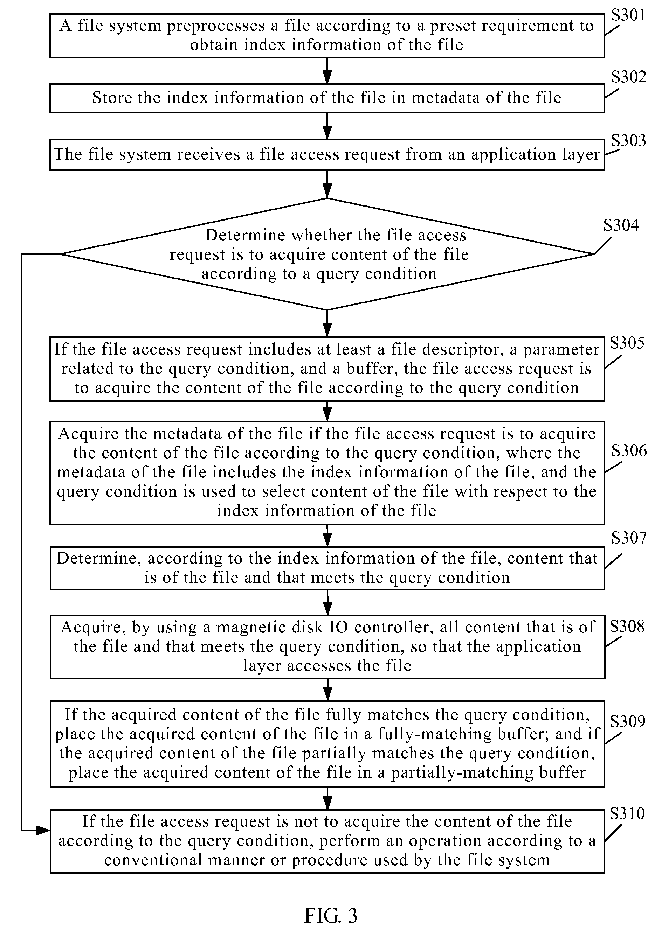

Referring to FIG. 3, FIG. 3 is a flowchart of still another embodiment of a method for accessing a file according to the present invention. This embodiment is basically the same as the embodiment of FIG. 2; for same parts, reference is made to FIG. 2 and corresponding descriptions; and a difference is as follows: this embodiment further includes step S304, step S305, step S309, and step S310. Specific content is described in detail as follows:
Step S301: A file system preprocesses a file according to a preset requirement to obtain index information of the file.
Step S302: Store the index information of the file in metadata of the file.
   The index information includes at least a rule type and a range included by each cluster, and a manner of preprocessing the file is specified in the rule type.
Step S303: The file system receives a file access request from an application layer.
Step S304: Determine whether the file access request is to acquire content of the file according to a query condition.
   In an actual application, a file system does not need to preprocess all files and may preprocess only a particular file. For a file that is not preprocessed, after receiving a request for accessing the file (that is, a general file access request), the file system performs an operation according to a conventional manner or procedure. Therefore, whether the file access request is to acquire the content of the file according to the query condition needs to be determined.
Step S305: If the file access request includes at least a file descriptor, a parameter related to the query condition, and a buffer, the file access request is to acquire the content of the file according to the query condition, go to step S306; otherwise, go to step S310.

The file descriptor is a non-negative integer in form. Actually, the file descriptor is an index value, pointing to a record table that is maintained by a kernel for each process and that is used by the process to open a file. The buffer is a location in which the file is placed in a memory.

Generally, a file access request includes a file descriptor and a buffer. A general file access request further includes an offset of a file. A file access request that is to acquire content of a file according to a query condition (that is, a special file access request) further includes a parameter related to the query condition. For example, if the query condition includes a range of a parameter, the parameter related to the query condition may be an upper limit of the range, a lower limit of the range, whether the upper limit of the range is included, whether the lower limit of the range is included, or a range reverse to a range between the upper limit and the lower limit of the range. A specific example is described as follows: a parameter is A; 5 ≤ A ≤ 10, indicating that an upper limit of A is 10, a lower limit thereof is 5, and both the upper limit and the lower limit are included; 5 < A < 10, indicating that the upper limit of A is 10, the lower limit thereof is 5, neither the upper limit nor the lower limit is included; and A ≥ 5, A ≤ 10, indicating that the upper limit of A is 10, the lower limit thereof is 5, and a range of A is a range reverse to a range between the upper limit and the lower limit.

The buffer includes a fully-matching buffer and a partially-matching buffer.

The fully-matching buffer refers to a buffer for placing content that is of the file and that fully matches the query condition, and the partially-matching buffer refers to a buffer for placing content that is of the file and that partially matches the query condition.
Step S306: Acquire the metadata of the file if the file access request is to acquire the content of the file according to the query condition, where the metadata of the file includes the index information of the file, and the query condition is used to select content of the file with respect to the index information of the file.
Step S307: Determine, according to the index information of the file, content that is of the file and that meets the query condition.
Step S308: Acquire, by using a magnetic disk IO controller, all content that is of the file and that meets the query condition, so that the application layer accesses the file.
Step S309: If the acquired content of the file fully matches the query condition, place the acquired content of the file in a fully-matching buffer; and if the acquired content of the file partially matches the query condition, place the acquired content of the file in a partially-matching buffer.
   If content of the file acquired from a magnetic disk fully matches the query condition, the acquired content of the file is placed in the fully-matching buffer; and if the content of the file acquired from the magnetic disk partially matches the query condition, the acquired content of the file is placed in the partially-matching buffer.
Step S310: If the file access request is not to acquire the content of the file according to the query condition, perform an operation according to a conventional manner or procedure used by the file system.

If the file access request is not to acquire the content of the file according to the query condition, that is, the file access request is a general file access request, an operation is performed according to the conventional manner or procedure used by the file system.

It should be noted that in an actual application, a step may be added to or removed from the foregoing steps according to a specific situation, which is not limited herein.

In this embodiment of the present invention, a file system preprocesses a file according to a preset requirement, obtained index information of the file is stored in metadata of the file, and when a file access request received from an application layer is to acquire content of the file according to a query condition, where the query condition is used to select content of the file with respect to the index information of the file, all content that is of the file and that meets the query condition may be acquired according to the index information by using a magnetic disk IO controller. Therefore, in this embodiment of the present invention, multiple times of page faults and multiple times of magnetic disk IO that occur in one query can be avoided, and memory usage is reduced by means of filtering out a part of data.

In addition, a general file access request and a special file access request are effectively distinguished from each other according to whether a file access request includes a parameter related to a query condition; and efficiency of accessing a file can be further improved by distinguishing between a fully-matching buffer and a partially-matching buffer.

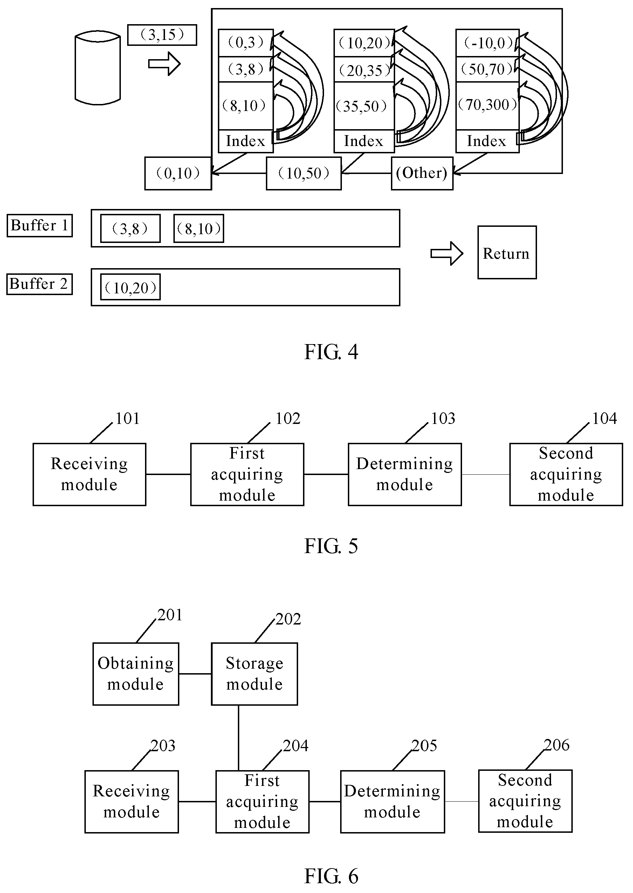

A specific example is used to describe this embodiment. Referring to FIG. 4, FIG. 4 shows a process of querying blocks from the 3rd one to the 15th one. First, an application layer sends a special file access request (that is, to acquire content of the file according to a query condition) for requesting to query blocks from the 3rd one to the 15th one. Next, a file system acquires index information of metadata of the file according to the special file access request, determines, according to the index information of the metadata of the file, which cluster meets the condition (two clusters (0, 10) and (10, 05) herein meet the condition), then acquires index information of both the two clusters, and finally locates three blocks (3, 8), (8, 10), and (10, 20). Because the index information already includes value information (a maximum value and a minimum value) of a block, it may be easily recognized that two blocks (3, 8) and (8, 10) need to be placed in a fully-matching buffer 1 and the block (10, 20) needs to be placed in a partially-matching buffer 2. Finally, content in the two buffers is returned.

Referring to FIG. 5, FIG. 5 is a schematic structural diagram of an embodiment of an apparatus for accessing a file according to the present invention, where the apparatus includes a receiving module 101, a first acquiring module 102, a determining module 103, and a second acquiring module 104.

It should be noted that the apparatus in FIG. 5 can perform steps from FIG. 1 to FIG. 3.

The receiving module 101 is configured to receive a file access request from an application layer.

A system for accessing a file in the present invention includes three layers: a first one is an application layer, where a database is usually located at the application layer; a second one is a file system layer; and a third one is a magnetic disk, that is, a location in which a file is stored.

A file system is a method and a data structure used by an operating system to determine a file in a magnetic disk or a partition, that is, a method for organizing data in the magnetic disk. Specifically, the file system is responsible for creating a file for a user; storing, reading, modifying, and dumping the file; deleting the file when the user no longer uses the file; and the like.

Generally, a file system does not perform any processing on a file. A database is a warehouse in which data is organized, stored, and managed according to a data structure. In this embodiment of the present invention, a file system has already preprocessed a file according to a preset requirement. That is, some functions of a database are added to the file system. The preset requirement is a requirement preset for preprocessing (for example, organizing, sequencing, classifying, and collating) the file. For example, sequencing is performed on the file according to a condition, for example, sequencing may be performed, according to a column, on a column database file that records information about a column; the file is processed according to a hash value; or the file is processed according to a range of a parameter of the file.

The first acquiring module 102 is configured to: after the receiving module 101 receives the file access request from the application layer, acquire metadata of a file when the file access request is to acquire content of the file according to a query condition, where the metadata of the file includes index information of the file, and the query condition is used to select content of the file with respect to the index information of the file.

Metadata (Metadata) is data about other data (data about other data) or is structured data (structured data) used to provide related information of a resource.

An index itself is information that needs to be used frequently in a database and is a structure that is used to perform sequencing on a value of one or more columns in a database table. Particular information in the database table may be accessed quickly by using the index. In this embodiment of the present invention, the index information is introduced in the file system, and the index information obtained after the file is preprocessed is stored in the metadata of the file.

After preprocessing the file according to the preset requirement, the file system obtains the index information of the file and stores the index information of the file in the metadata of the file. The file system acquires the metadata of the file if the file access request is to acquire the content of the file according to the query condition. Because the index information of the preprocessed file is stored in the metadata, and the query condition is used to select the content of the file with respect to the index information of the file, a specific location, in a magnetic disk, of content that is of the file and that needs to be acquired selectively may be conveniently learned according to the index information, and content that is of the file and that is required by the file access request can be acquired.

The index information includes at least a rule type and a range included by each cluster, and a manner of preprocessing the file is specified in the rule type. The rule type is used to specify how to preprocess the file. For example, sequencing is performed on the file, classification is performed according to a range of a parameter, or processing is performed according to a hash value.

A file system is an interface between an operating system and a drive. When requesting to read a file from a hard disk, the operating system requests a corresponding file system to open the file. A sector is a minimum physical storage unit of a magnetic disk. However, the operating system cannot perform addressing on large quantities of sectors. Therefore, the operating system groups adjacent sectors to form a cluster and manages the cluster. Each cluster may include 2, 4, 8, 16, 32, or 64 sectors. Apparently, a cluster is a logical concept used by the operating system, but not a physical characteristic of the magnetic disk. In order to better manage magnetic disk space and read data from the hard disk more efficiently, the operating system specifies that content of only one file can be placed in one cluster. Therefore, space occupied by a file can only be an integer multiple of a size of a cluster. If an actual size of a file is less than that of one cluster, the file still occupies space of one cluster.

When a range included by each cluster is known, a total quantity of clusters may be learned. Certainly, the index information may further include a data type of the file, for example, an exact numeric type, an approximate numeric type, a date and time type, a character data type, a Unicode character data type, a binary character data type, and another data type. The index information may further include other information, and details are not described herein.

The determining module 103 is configured to: after the first acquiring module 102 acquires the metadata of the file, determine, according to the index information of the file, content that is of the file and that meets the query condition.

Because the query condition is used to select the content of the file with respect to the index information of the file, the specific location, in the magnetic disk, of the content that is of the file and that needs to be acquired may be conveniently learned according to the index information, and the content that is of the file and that meets the query condition can be determined.

The second acquiring module 104 is configured to: after the determining module 103 determines the content that is of the file and that meets the query condition, acquire, by using a magnetic disk IO controller, all content that is of the file and that meets the query condition, so that the application layer accesses the file.

As described above, a file is preprocessed according to a preset requirement in advance, index information obtained after the preprocessing is stored in metadata of the file, and a query condition is used to select content of the file with respect to the index information of the file. A storage location of content that is of the file and that meets the query condition may be quickly learned by using the index information; all content that is of the file and that meets the query condition may be acquired by using a magnetic disk IO controller, so that it is convenient for an application layer to access the file.

In this embodiment of the present invention, index information of a file that has been preprocessed according to a preset requirement is stored in metadata of the file, and when a file access request received from an application layer is to acquire content of the file according to a query condition, all content that is of the file and that meets the query condition may be acquired according to the index information by using a magnetic disk IO controller. Therefore, in this embodiment of the present invention, multiple times of page faults and multiple times of magnetic disk IO that occur in one query can be avoided, and memory usage is reduced by means of filtering out a part of data.

Referring to FIG. 6, FIG. 6 is a schematic structural diagram of another embodiment of an apparatus for accessing a file according to the present invention, where the apparatus includes an obtaining module 201, a storage module 202, a receiving module 203, a first acquiring module 204, a determining module 205, and a second acquiring module 206. The apparatus in this embodiment is basically the same as the apparatus in FIG. 5; for same parts, reference is specifically made to FIG. 5 and corresponding descriptions; and a difference is as follows: the apparatus in this embodiment further includes the obtaining module 201 and the storage module 202. Specific content is as follows:
It should be noted that the apparatus in FIG. 6 can perform steps in FIG. 2.

The obtaining module 201 is configured to preprocess a file according to a preset requirement to obtain index information of the file.

A file system is a method and a data structure used by an operating system to determine a file in a magnetic disk or a partition, that is, a method for organizing data in the magnetic disk. Generally, a file system does not perform any processing on a file. A database is a warehouse in which data is organized, stored, and managed according to a data structure. In this embodiment of the present invention, a file system preprocesses the file according to the preset requirement. That is, some functions of a database are added to the file system. The preset requirement is a requirement preset for preprocessing (for example, organizing, sequencing, classifying, and collating) the file.

The storage module 202 is configured to: after the obtaining module 201 obtains the index information of the file, store the index information of the file in metadata of the file.

After preprocessing the file according to the preset requirement, the file system obtains the index information of the file and stores the index information of the file in the metadata of the file. The file system acquires the metadata of the file if a file access request is to acquire content of the file according to a query condition. Because the index information of the preprocessed file is stored in the metadata, and the query condition is used to select content of the file with respect to the index information of the file, a specific location, in a magnetic disk, of content that is of the file and that needs to be acquired may be conveniently learned according to the index information, and content that is of the file and that is required by the file access request can be acquired.

The index information includes at least a rule type and a range included by each cluster, and a manner of preprocessing the file is specified in the rule type. The rule type is used to specify how to preprocess the file. For example, sequencing is performed on the file, classification is performed according to a range of a parameter, or processing is performed according to a hash value.

A file system is an interface between an operating system and a drive. When requesting to read a file from a hard disk, the operating system requests a corresponding file system to open the file. A sector is a minimum physical storage unit of a magnetic disk. However, the operating system cannot perform addressing on large quantities of sectors. Therefore, the operating system groups adjacent sectors to form a cluster and manages the cluster.

When a range included by each cluster is known, a total quantity of clusters may be learned. Certainly, the index information may further include a data type of the file, for example, an exact numeric type, an approximate numeric type, a date and time type, a character data type, a Unicode character data type, a binary character data type, and another data type. The index information may further include other information, and details are not described herein.

The receiving module 203 is configured to receive a file access request from an application layer.

The first acquiring module 204 is configured to: after the receiving module 203 receives the file access request from the application layer, acquire the metadata of the file when the file access request is to acquire content of the file according to a query condition, where the metadata of the file includes the index information of the file, and the query condition is used to select content of the file with respect to the index information of the file.

The determining module 205 is configured to: after the first acquiring module 204 acquires the metadata of the file, determine, according to the index information of the file, content that is of the file and that meets the query condition.

The second acquiring module 206 is configured to: after the determining module 205 determines the content that is of the file and that meets the query condition, acquire, by using a magnetic disk IO controller, all content that is of the file and that meets the query condition, so that the application layer accesses the file.

In this embodiment of the present invention, a file system preprocesses a file according to a preset requirement, obtained index information of the file is stored in metadata of the file, and when a file access request received from an application layer is to acquire content of the file according to a query condition, where the query condition is used to select content of the file with respect to the index information of the file, all content that is of the file and that meets the query condition may be acquired according to the index information by using a magnetic disk IO controller. Therefore, in this embodiment of the present invention, multiple times of page faults and multiple times of magnetic disk IO that occur in one query can be avoided, and memory usage is reduced by means of filtering out a part of data.

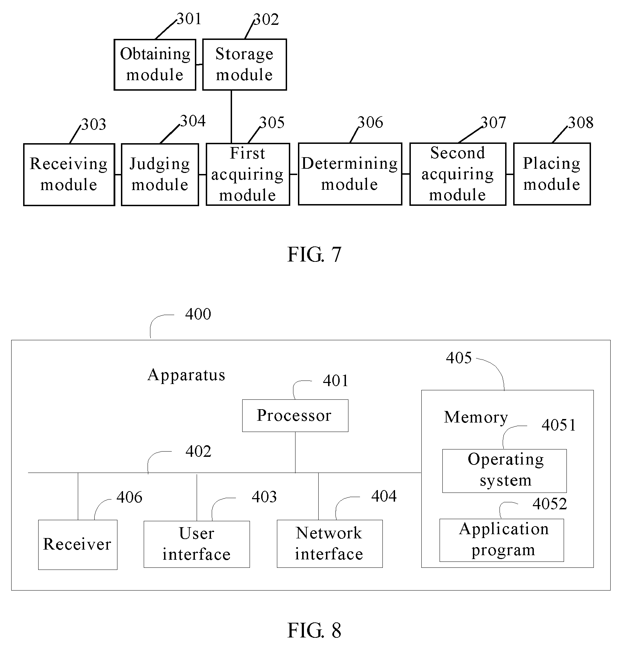

Referring to FIG. 7, FIG. 7 is a schematic structural diagram of still another embodiment of an apparatus for accessing a file according to the present invention, where the apparatus includes an obtaining module 301, a storage module 302, a receiving module 303, a judging module 304, a first acquiring module 305, a determining module 306, a second acquiring module 307, and a placing module 308. The apparatus in this embodiment is basically the same as the apparatus in FIG. 6; for same parts, reference is made to FIG. 6 and corresponding descriptions; and a difference is as follows: the apparatus in this embodiment further includes the judging module 304 and the placing module 308. Details are described as follows:
It should be noted that the apparatus in FIG. 7 can perform steps in FIG. 3.

The obtaining module 301 is configured to preprocess a file according to a preset requirement to obtain index information of the file.

The storage module 302 is configured to: after the obtaining module 301 obtains the index information of the file, store the index information of the file in metadata of the file.

The index information includes at least a rule type and a range included by each cluster, and a manner of preprocessing the file is specified in the rule type.

The receiving module 303 is configured to receive a file access request from an application layer.

The judging module 304 is configured to: determine whether the file access request is to acquire content of the file according to a query condition; and when the file access request includes at least a file descriptor, a parameter related to the query condition, and a buffer, determine that the file access request is to acquire the content of the file according to the query condition.

In an actual application, a file system does not need to preprocess all files and may preprocess only a particular file. For a file that is not preprocessed, after receiving a request for accessing the file (that is, a general file access request), the file system performs an operation according to a conventional manner or procedure. Therefore, whether the file access request is to acquire the content of the file according to the query condition needs to be determined.

The file descriptor is a non-negative integer in form. Actually, the file descriptor is an index value, pointing to a record table that is maintained by a kernel for each process and that is used by the process to open a file. The buffer is a location in which the file is placed in a memory.

Generally, a file access request includes a file descriptor and a buffer. A general file access request further includes an offset of a file. A file access request that is to acquire content of a file according to a query condition (that is, a special file access request) further includes a parameter related to the query condition. For example, if the query condition includes a range of a parameter, the parameter related to the query condition may be an upper limit of the range, a lower limit of the range, whether the upper limit of the range is included, whether the lower limit of the range is included, or a range reverse to a range between the upper limit and the lower limit of the range. A specific example is described as follows: a parameter is A; 5 ≤ A ≤ 10, indicating that an upper limit of A is 10, a lower limit thereof is 5, and both the upper limit and the lower limit are included; 5 < A ≤ 10, indicating that the upper limit of A is 10, the lower limit thereof is 5, neither the upper limit nor the lower limit is included; and A ≥ 5, A ≤ 10, indicating that the upper limit of A is 10, the lower limit thereof is 5, and a range of A is a range reverse to a range between the upper limit and the lower limit.

The buffer includes a fully-matching buffer and a partially-matching buffer.

The fully-matching buffer refers to a buffer for placing content that is of the file and that fully matches the query condition, and the partially-matching buffer refers to a buffer for placing content that is of the file and that partially matches the query condition.

The first acquiring module 305 is configured to acquire the metadata of the file when the file access request is to acquire the content of the file according to the query condition, where the metadata of the file includes the index information of the file, and the query condition is used to select content of the file with respect to the index information of the file.

The determining module 306 is configured to: after the first acquiring module 305 acquires the metadata of the file, determine, according to the index information of the file, content that is of the file and that meets the query condition.

The second acquiring module 307 is configured to: after the determining module 306 determines the content that is of the file and that meets the query condition, acquire, by using a magnetic disk IO controller, all content that is of the file and that meets the query condition, so that the application layer accesses the file.

The placing module 308 is configured to: when the acquired content of the file fully matches the query condition, place the acquired content of the file in a fully-matching buffer; and when the acquired content of the file partially matches the query condition, place the acquired content of the file in a partially-matching buffer.

If content of the file acquired from a magnetic disk fully matches the query condition, the acquired content of the file is placed in the fully-matching buffer; and if the content of the file acquired from the magnetic disk partially matches the query condition, the acquired content of the file is placed in the partially-matching buffer.

It should be noted that in an actual application, a module or unit may be added to or removed from the foregoing modules or units according to a specific situation, which is not limited herein.

In this embodiment of the present invention, a file system preprocesses a file according to a preset requirement, obtained index information of the file is stored in metadata of the file, and when a file access request received from an application layer is to acquire content of the file according to a query condition, where the query condition is used to select content of the file with respect to the index information of the file, all content that is of the file and that meets the query condition may be acquired according to the index information by using a magnetic disk IO controller. Therefore, in this embodiment of the present invention, multiple times of page faults and multiple times of magnetic disk IO that occur in one query can be avoided, and memory usage is reduced by means of filtering out a part of data.

In addition, a general file access request and a special file access request are effectively distinguished from each other according to whether a file access request includes a parameter related to a query condition; and efficiency of accessing a file can be further improved by distinguishing between a fully-matching buffer and a partially-matching buffer.

Refer to FIG. 8, FIG. 8 is a schematic structural diagram of another apparatus 400 for accessing a file according to the present invention, where the apparatus 400 includes at least one processor 401, for example, a CPU, at least one network interface 404, or another user interface 403, a memory 405, at least one communications bus 402, and a receiver 406. The communications bus 402 is configured to implement connection and communication between these components. The computing node 400 optionally includes the user interface 403, where the user interface 403 includes a display, a keyboard, or a click device (for example, a mouse, a trackball (trackball), a touchpad, or a touch display screen). The memory 405 may include a high-speed RAM memory and may further include a non-volatile memory (non-volatile memory), for example, at least one magnetic disk memory. The memory 405 may optionally include at least one storage apparatus that is located far from the foregoing processor 401.

In some embodiments, the memory 405 stores the following elements: executable modules or data structures, or subsets thereof, or extension sets thereof:
an operating system 4051, including various system programs, and configured to implement various basic services and process hardware-based tasks; and
an application program module 4052, including various application programs, and configured to implement various application services.

In this embodiment of the present invention, the receiver 406 is configured to receive a file access request from an application layer and store the file access request from the application layer in the memory 405.

The memory 405 further stores metadata of a file, where the metadata of the file includes index information of the file.

By invoking the file access request that is from the application layer and that is stored by the memory 405 and other related information, the processor 401 is configured to: acquire the metadata of the file from the memory 405 when the file access request is to acquire content of the file according to a query condition, where the metadata of the file includes the index information of the file, and the query condition is used to select content of the file with respect to the index information of the file; determine, according to the index information of the file, content that is of the file and that meets the query condition; and invoke a magnetic disk IO controller to acquire all content that is of the file and that meets the query condition and store, in the memory 405, all the content that is of the file and that meets the query condition, so that the application layer accesses the file.

In each of the foregoing embodiments, further, the processor 401 is further configured to: preprocess the file according to a preset requirement to obtain the index information of the file; and store the index information of the file in the metadata of the file in the memory 405.

The index information includes at least a rule type and a range included by each cluster, and a manner of preprocessing the file is specified in the rule type.

The processor 401 is further configured to: determine whether the file access request is to acquire the content of the file according to the query condition. When the file access request includes at least a file descriptor, a parameter related to the query condition, and a buffer, a result of the determining is that the file access request is to acquire the content of the file according to the query condition.

The buffer includes a fully-matching buffer and a partially-matching buffer.

The processor 401 is further configured to: when the acquired content of the file fully matches the query condition, place the acquired content of the file in the fully-matching buffer of the memory 405; and when the acquired content of the file partially matches the query condition, place the acquired content of the file in the partially-matching buffer of the memory 405.

It can be seen that after the foregoing solution is used, all content that is of a file and that meets a query condition may be acquired according to index information of metadata of the file by using a magnetic disk IO controller. Therefore, in this embodiment of the present invention, multiple times of page faults and multiple times of magnetic disk IO that occur in one query can be avoided, and memory usage is reduced by means of filtering out a part of data.

In addition, a general file access request and a special file access request are effectively distinguished from each other according to whether a file access request includes a parameter related to a query condition; and efficiency of accessing a file can be further improved by distinguishing between a fully-matching buffer and a partially-matching buffer.

In the several embodiments provided in the present invention, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the implementation manners.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely embodiments of the present invention, and are not intended to limit the scope of the present invention. An equivalent structural or equivalent process alternation made by using the content of the specification and drawings of the present invention, or an application of the content of the specification and drawings directly or indirectly to another related technical field, shall fall within the protection scope of the present invention.

## Claims

1. A method for accessing a file, comprising:
receiving, by a file system, a file access request from an application layer;
acquiring metadata of the file if the file access request is to acquire content of the file according to a query condition, wherein the metadata of the file comprises index information of the file, and the query condition is used to select content of the file with respect to the index information of the file;
determining, according to the index information of the file, content that is of the file and that meets the query condition; and
acquiring, by using a magnetic disk IO controller, all content that is of the file and that meets the query condition, so that the application layer accesses the file.

2. The method according to claim 1, before the step of receiving, by a file system, a file access request from an application layer, comprising:
preprocessing, by the file system, the file according to a preset requirement to obtain the index information of the file; and
storing the index information of the file in the metadata of the file.

3. The method according to claim 2, wherein the index information comprises at least a rule type and a range comprised by each cluster, and a manner of preprocessing the file is specified in the rule type.

4. The method according to claim 1, before the step of acquiring metadata of the file if the file access request is to acquire content of the file according to a query condition, comprising:
determining whether the file access request is to acquire the content of the file according to the query condition, wherein
if the file access request comprises at least a file descriptor, a parameter related to the query condition, and a buffer, the file access request is to acquire the content of the file according to the query condition.

5. The method according to claim 4, wherein the buffer comprises a fully-matching buffer and a partially-matching buffer.

6. The method according to claim 5, after the step of acquiring, by using a magnetic disk IO controller, all content that is of the file and that meets the query condition, comprising:
if the acquired content of the file fully matches the query condition, placing the acquired content of the file in the fully-matching buffer; and if the acquired content of the file partially matches the query condition, placing the acquired content of the file in the partially-matching buffer.

7. An apparatus for accessing a file, wherein the apparatus comprises a receiving module, a first acquiring module, a determining module, and a second acquiring module, wherein
the receiving module is configured to receive a file access request from an application layer;
the first acquiring module is configured to: after the receiving module receives the file access request from the application layer, acquire metadata of the file when the file access request is to acquire content of the file according to a query condition, wherein the metadata of the file comprises index information of the file, and the query condition is used to select content of the file with respect to the index information of the file;
the determining module is configured to: after the first acquiring module acquires the metadata of the file, determine, according to the index information of the file, content that is of the file and that meets the query condition; and
the second acquiring module is configured to: after the determining module determines the content that is of the file and that meets the query condition, acquire, by using a magnetic disk IO controller, all content that is of the file and that meets the query condition, so that the application layer accesses the file.

8. The apparatus according to claim 7, wherein the apparatus further comprises an obtaining module and a storage module, wherein
the obtaining module is configured to preprocess the file according to a preset requirement to obtain the index information of the file; and
the storage module is configured to store the index information of the file in the metadata of the file after the obtaining module obtains the index information of the file.

9. The apparatus according to claim 8, wherein the index information comprises at least a rule type and a range comprised by each cluster, and a manner of preprocessing the file is specified in the rule type.

10. The apparatus according to claim 1, wherein the apparatus further comprises a judging module, wherein
the judging module is configured to: determine whether the file access request is to acquire the content of the file according to the query condition; and when the file access request comprises at least a file descriptor, a parameter related to the query condition, and a buffer, determine that the file access request is to acquire the content of the file according to the query condition.

11. The apparatus according to claim 10, wherein the buffer comprises a fully-matching buffer and a partially-matching buffer.

12. The apparatus according to claim 11, wherein the apparatus further comprises a placing module, wherein
the placing module is configured to: when the acquired content of the file fully matches the query condition, place the acquired content of the file in the fully-matching buffer; and when the acquired content of the file partially matches the query condition, place the acquired content of the file in the partially-matching buffer.
